# EUROPEAN PATENT APPLICATION

(11) **EP 2 493 201 A2**
(43) Date of publication of application: **29.08.2012**
(21) Application number: 11177317.2
(22) Date of filing: 11.08.2011
(51) Int. Cl.: H04N 13/00

(54) **Video display method and video display apparatus**

(30) Priority: 23.02.2011 JP 2011037389
(71) Applicant: Kabushiki Kaisha Toshiba, Tokyo 105-8001 (JP)
(72) Inventor: Ikehata, Tatsuhiko, Tokyo, 105-8001 (JP); Matsubara, Shinzo, Tokyo, 105-8001 (JP); Kobayashi, Takero, Tokyo, 105-8001 (JP); Izawa, Hidehito, Tokyo, 105-8001 (JP)
(74) Representative: Henkel, Breuer & Partner

(57) **Abstract**

A video display method according to an embodiment includes: storing setting contents concerning whether to view a three-dimensional video continuously; and either displaying an input video as a three-dimensional video, or displaying the input video as a two-dimensional video, based on the stored setting contents.

## Description

### FIELD

Embodiments described herein relate generally to a video display method and a video display apparatus.

### BACKGROUND

In recent years, video display apparatuses having a function of displaying a three-dimensional video have been commercialized. Furthermore, among the video display apparatuses, there are also products having a function of converting a two-dimensional video to a three-dimensional video. In the products having this conversion function, an ordinary two-dimensional video is also converted to a three-dimensional video. Even if the viewer does not intentionally select a broadcast or external contents of a three-dimensional video, therefore, the viewer can view all video sources as three-dimensional videos. In the case where the three-dimensional video display mode is set, therefore, the three-dimensional video display mode is continued throughout even if the video source is changed over, as long as the viewer does not return the mode to the two-dimensional video display mode.

On the other hand, the case where some viewers feel unwell or are subject to asthenopia when they view a three-dimensional video for a ling time continuously is also conceivable. In order to avoid such phenomena, there are also products in which the two-dimensional video display mode is restored whenever the video source changeover, such as, for example, broadcast channel changeover performed by the user takes place.

Some viewers usually view in the two-dimensional video display mode and want to view different programs and external contents in the three-dimensional video display mode. In the former cited products, such viewers must restore the two-dimensional video display mode manually when the video source is changed over to a different program or external contents, resulting in inconvenience.

In the latter cited products, a viewer who wants to view various programs and external contents in the three-dimensional video display mode must wait to set the three-dimensional video display mode manually until the two-dimensional video display mode is restored, whenever the video source is changed over, resulting in much trouble.

### BRIEF DESCRIPTION OF THE DRAWINGS

FIG. 1 is a block diagram showing a video display apparatus according to a first embodiment;
FIG. 2 is a flow chart for explaining a method for performing video display on the basis of three-dimensional video continuous viewing setting contents, in the first embodiment;
FIG. 3 is a block diagram showing a function of performing video display on the basis of the three-dimensional video continuous viewing setting contents;
FIG. 4 is a diagram for explaining a method for setting the three-dimensional video continuous viewing;
FIG. 5 is a flow chart for explaining a method for performing video display on the basis of three-dimensional video continuous viewing setting contents, in a modification of the first embodiment;
FIG. 6 is a flow chart for explaining a method for performing video display on the basis of three-dimensional video continuous viewing setting contents, in a second embodiment; and
FIG. 7 is a flow chart for explaining a method for performing video display on the basis of three-dimensional video continuous viewing setting contents, in a third embodiment.

### DETAILED DESCRIPTION

A video display method according to an embodiment includes: storing setting contents concerning whether to view a three-dimensional video continuously; and either displaying an input video as a three-dimensional video, or displaying the input video as a two-dimensional video, based on the stored setting contents.

Hereafter, embodiments will be described more specifically with reference to the drawings.

### (First Embodiment)

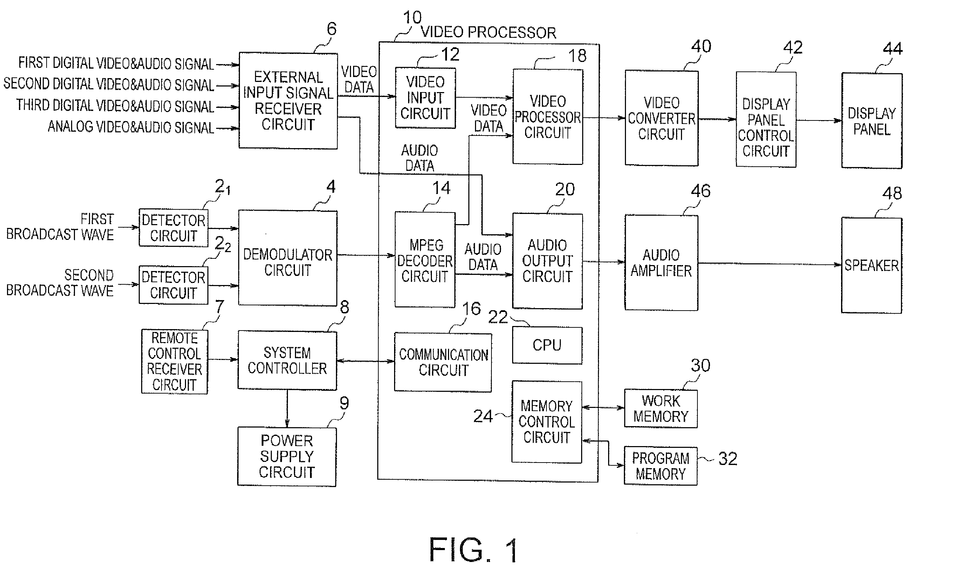

A video display apparatus according to a first embodiment is shown in FIG. 1. In the video display apparatus according to this embodiment, radio waves of a first broadcast wave and a second broadcast wave received by an antenna which is not illustrated are detected respectively by detector circuits 2₁ and 2₂ and sent to a demodulator circuit 4. The demodulator circuit 4 demodulates video and audio broadcast data subjected to MPEG compression and sends resultant data to a video processor 10.

On the other hand, an external input signal receiver circuit 6 receives video and audio signals supplied from a plurality of external devices, such as, for example, first to third digital video&audio signals and an analog video&audio signal in respective ports, separates a signal in a port selected by a viewer to video data and audio data, and sends the video data and audio data respectively to a video input circuit 12 and an audio output circuit 20.

In the video processor 10, the video and audio data sent via the demodulator circuit 4 are sent to an MPEG decoder circuit 14 and separated to video data and audio data. The video data and audio data are sent to a video processor circuit 18 and the audio output circuit 20, respectively.

The video processor circuit 18 performs processing on the sent video data to make it conform to a display panel 44, and then sends resultant data to a video converter circuit 40. Furthermore, a CPU 22 is incorporated in the video processor 10. The CPU 22 makes a decision whether the video signal which is input from the external is a three-dimensional video. The CPU 22 displays a setting menu concerning whether to perform conversion from a two-dimensional video to a three-dimensional video in the case of a two-dimensional video or whether to view a three-dimensional video continuously, on the display 44, and sends an instruction to the video converter circuit 40 on the basis of setting contents selected by the viewer from the setting menu. For example, the CPU 22 gives an instruction such as two-dimensional video without conversion, conversion from two-dimensional video to three-dimensional video, or conversion from three-dimensional video to three-dimensional video to the video converter circuit 40 on the basis of setting contents selected by the viewer. The video converter circuit 40 converts video data on the basis of the instruction, and sends the converted video data to the display panel 44 through a display panel control circuit 42. The converted video data is displayed on the display panel 44.

On the other hand, audio data sent to the audio output circuit 20 is sent to an audio amplifier 46 and amplified therein. The amplified audio data is sent to a speaker 48 and output.

The video processor 10 includes a memory control circuit 24. The memory control circuit 24 performs access to program data in a program memory 32, data control in a work memory 30 during its operation, and access to GUI data in the menu. In addition, the memory control circuit 24 performs buffering of video data for video processing in the work memory 30.

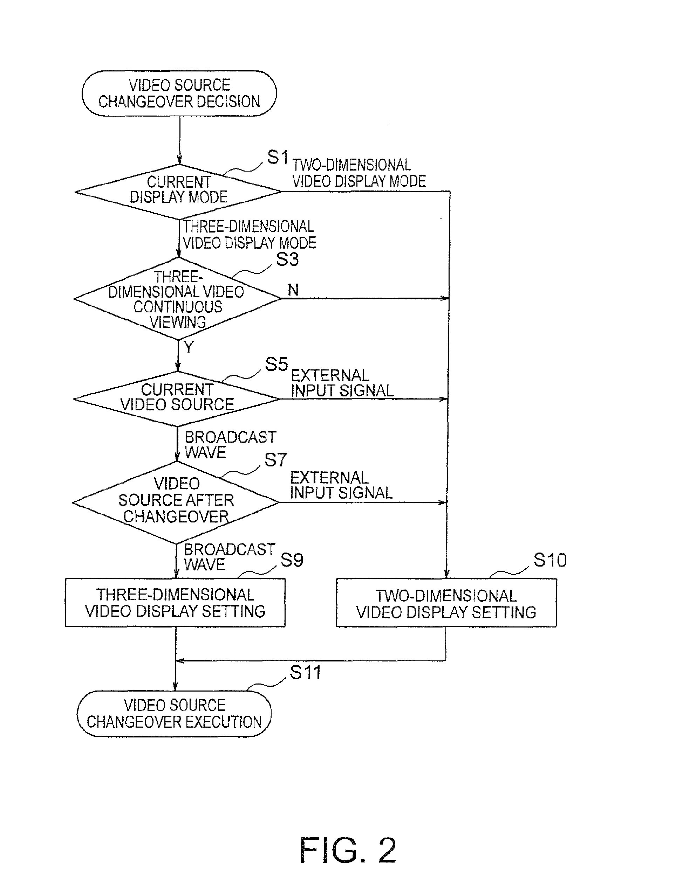

An instruction such as a setting manipulation of the viewer is acquired by receiving infrared light rays emitted from a remote controller, in a remote control receiver circuit 7 and performing communication with a communication circuit 16 in the video processor 10 via a system controller 8 which controls a power supply circuit 9 and the like. The instruction is sent to the CPU 22. The CPU 22 performs setting on the basis of the instruction. Operation of the CPU 22 concerning the manipulation menu which is set by the viewer will now be described with reference to FIGS. 2 to 4.

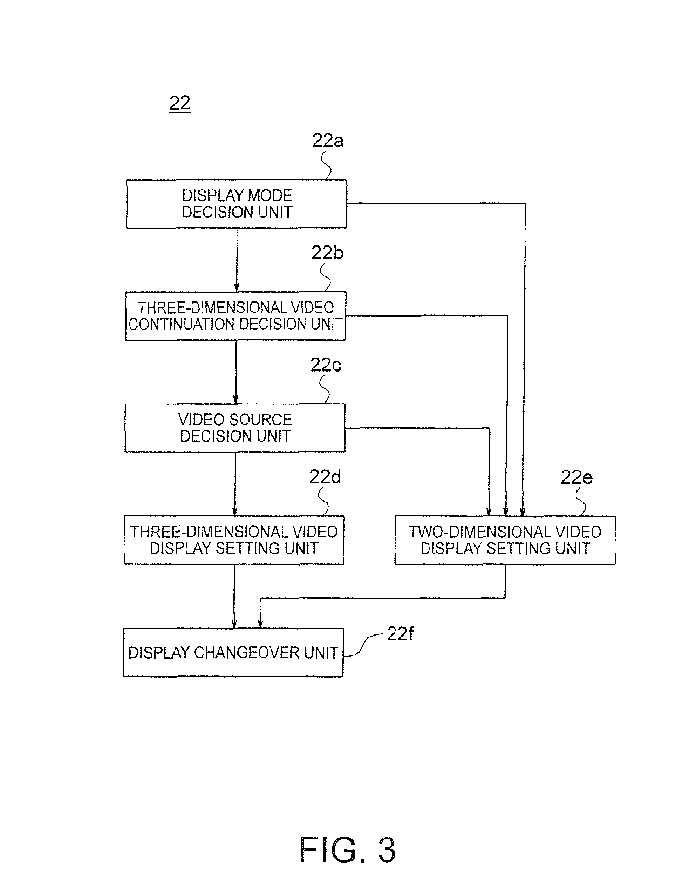

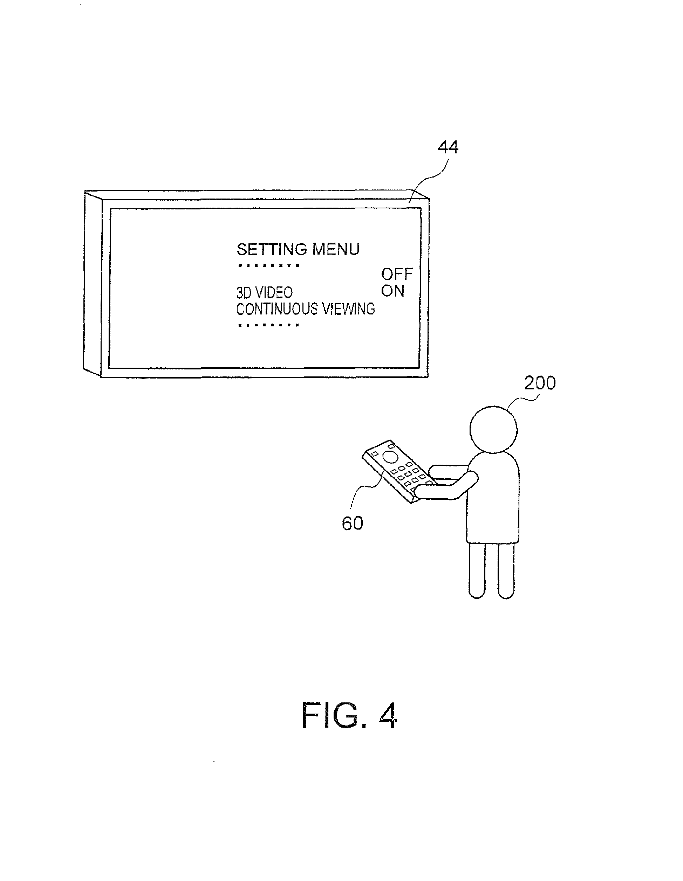

FIG. 2 is a flow chart showing a procedure used when the CPU 22 makes a video source changeover decision, for example, the CPU 22 performs changeover of channel or the like. FIG. 3 is a function block diagram of the CPU 22. FIG. 4 is a diagram for explaining a case where the viewer performs setting by using, for example, the remote controller. As shown in FIG. 4, a viewer 200 previously performs various kinds of setting, such as, for example, setting as to whether to continuously view a three-dimensional video (3D video continuous viewing setting) by using, for example, a remote controller 60 with reference to the setting menu displayed on the display panel 44. This setting can be performed when the video display apparatus is purchased, or can be performed whenever the video display apparatus is turned on. Contents which are set are retained in a memory, such as, for example, the program memory 32. In the present embodiment, the CPU 22 includes a display mode decision unit 22a, a three-dimensional video continuation decision unit 22b, a video source decision unit 22c, a three-dimensional video display setting unit 22d, a two-dimensional video display setting unit 22e, and a display changeover unit 22f as shown in FIG. 3.

First, the display mode decision unit 22a makes a decision whether the current display mode is the two-dimensional video display mode or the three-dimensional video mode (see step S1 in FIG. 2). If the current display mode is the two-dimensional video display mode, then the processing proceeds to step S10 and the two-dimensional video display setting unit 22e sets the two-dimensional video display. In the case of the three-dimensional video display mode, processing proceeds to step S3 and the three-dimensional continuation decision unit 22b makes a decision whether to perform three-dimensional video continuous viewing on the basis of setting contents which are previously set by the viewer and stored in the memory. If the setting contents which are set by the viewer are "continuous viewing is not performed," then the processing proceeds to the step S10 and the two-dimensional video display setting unit 22e sets the two-dimensional video display.

If the setting contents which are set by the viewer and stored in the memory are "continuous viewing is performed," then the processing proceeds to step S5 and the video source decision unit 22c makes a decision whether the current video source is a broadcast wave or an external input signal supplied from a video player or the like. If the current video source is judged to be an external input signal, then the processing proceeds to the step S10 and the two-dimensional video display setting unit 22e sets the two-dimensional video display. On the other hand, if the current video source is judged to be a broadcast wave, then the processing proceeds to step S7 and the video source decision unit 22c makes a decision whether a video source after the changeover is a broadcast wave or an external input signal. If the video source after the changeover is judged to be an external input signal, then the processing proceeds to the step S10 and the two-dimensional video display setting unit 22e sets the two-dimensional video display. If the video source after the changeover is judged to be a broadcast wave, then the processing proceeds to step S9 and the three-dimensional video display setting unit 22d sets the three-dimensional video display and sends an instruction to the display changeover unit 22f to display a three-dimensional video. Furthermore, at the step S10, the two-dimensional video display setting unit 22e sets the two-dimensional video display and sends an instruction to the display changeover unit 22f to display a two-dimensional video. The display changeover unit 22f controls the video converter circuit 40 and the display panel control circuit 42 to change over the display on the basis of the above-described instruction (step S11).

According to the first embodiment, the two-dimensional video display setting or the three-dimensional video display setting is performed on the basis of the current display mode, the contents of the three-dimensional video continuous viewing setting, the current video source, and the video source after the changeover as described heretofore. As a result, it is possible to provide a video display method and a video display apparatus which do not need troublesome manual changeover manipulation when changing over the video source.

### (Modification)

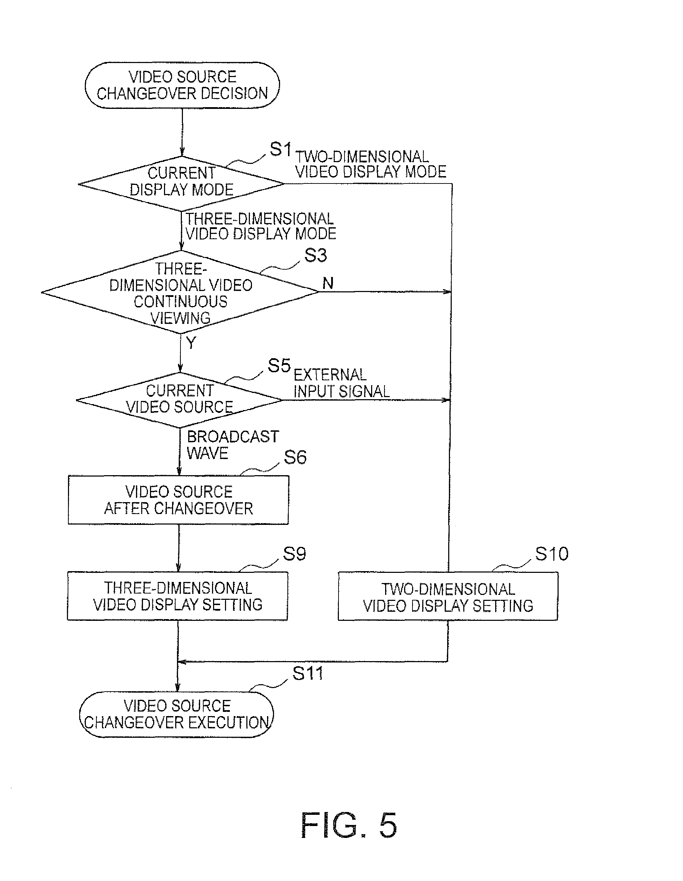

A modification of the video display apparatus according to the first embodiment will now be described with reference to FIG. 5. The video display apparatus according to this modification differs from that according to the first embodiment in operation of the CPU 22. Operation of the CPU 22 is shown in FIG. 5. The modification has a flow obtained from the first embodiment by replacing the step S7 with step S6. The step S6 is adapted to set the three-dimensional video display if the three-dimensional video continuous viewing is set, no matter whether the video source after the changeover is a broadcast wave or an external input signal. In other words, the video source decision unit 22c is adapted to send an instruction signal to the three-dimensional video display setting unit 22d no matter whether the video source after the changeover is a broadcast wave or an external input signal.

In this modification as well, it is possible to provide a video display method and a video display apparatus which do not need troublesome manual changeover manipulation when changing over the video source, in the same way as the first embodiment.

Incidentally, the modification can be adapted to set the two-dimensional video display when the video source after the changeover is an external input signal having no three-dimensional video and the external input signal is an analog video signal having a low video quality. These kinds of setting can be displayed in the setting menu to urge the viewer to perform selection beforehand.

### (Second Embodiment)

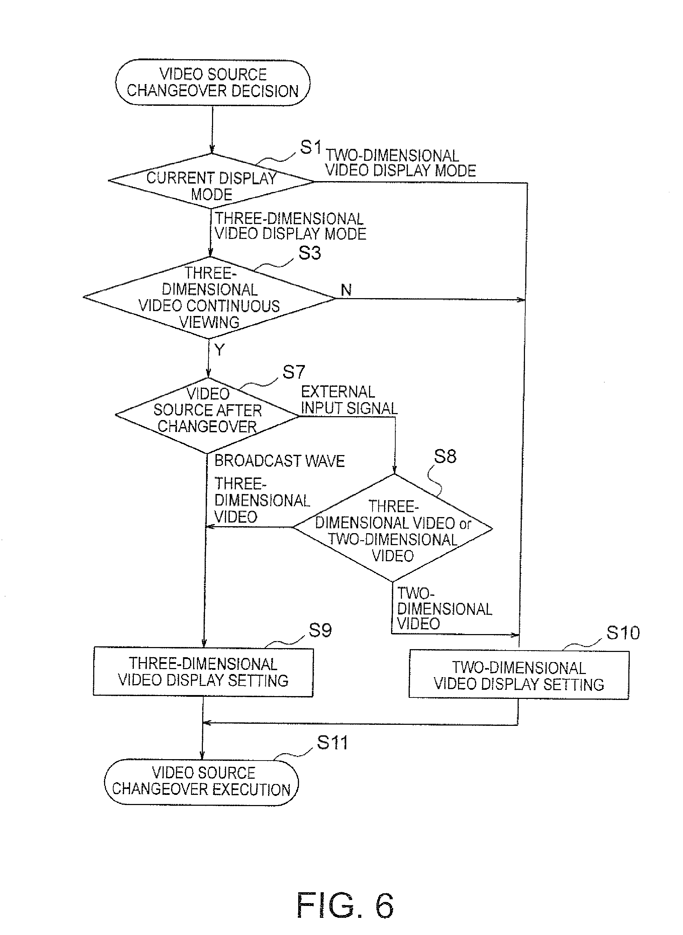

A video display apparatus according to a second embodiment will now be described with reference to FIG. 6. The video display apparatus according to the second embodiment differs from that according to the first embodiment in operation of the CPU 22. Operation of the CPU 22 is shown in FIG. 6. The second embodiment has a flow obtained from the first embodiment by removing the step S5 and newly adding step S8. In other words, operation of the CPU 22 shown in FIG. 6 represents operation performed when video source changeover is performed irrespective of the kind of the current video source.

In the second embodiment, the CPU 22 makes a decision in the video source decision unit 22c whether the video source after the changeover is a broadcast wave or an external input signal at the step S7. If the video source after the changeover is judged to be a broadcast wave, then the processing proceeds to the step S9 and the three-dimensional video display setting is performed in the same way as the first embodiment. On the other hand, if the video source after the changeover is judged to be an external input signal, then the processing proceeds to the step S8.

At the step S8, the video source decision unit 22c makes a decision whether the external input signal is a three-dimensional video or a two-dimensional video. If the external input signal is judged to be a two-dimensional video, then the processing proceeds to the step S10 and the two-dimensional video display setting unit 22e sets the two-dimensional video display. On the other hand, if the external input signal is judged at the step S8 to be a three-dimensional video, then the processing proceeds to the step S9 and the three-dimensional video display setting unit 22d sets the three-dimensional video display and sends an instruction to the display changeover unit 22f to display the three-dimensional video.

According to the second embodiment, the two-dimensional video display setting or the three-dimensional video display setting is performed on the basis of the current display mode, the contents of the three-dimensional video continuous viewing setting, and the video source after the changeover in the same way as the first embodiment as described heretofore. As a result, it is possible to provide a video display method and a video display apparatus which do not need troublesome manual changeover manipulation when changing over the video source.

Furthermore, the three-dimensional video display setting or the two-dimensional video display setting is performed depending upon whether the video source after the changeover is a three-dimensional video or a two-dimensional video. As a result, the troublesome manual changeover manipulation becomes unnecessary when changing over the video source.

Incidentally, in the second embodiment, the three-dimensional video display can be set even if the video source after the changeover is judged to be a two-dimensional video at the step S8.

Furthermore, even when the video source after the changeover is judged to be a two-dimensional video, it is possible to set the three-dimensional video display in the case where the quality of the video source is good, for example, in the case of a video of high resolution, and set the two-dimensional video display in the case where the quality of the video source is poor, for example, in the case of a video of low resolution such as an analog video signal. As for whether the quality is good in this case, the CPU 22 can automatically make a decision, or a setting menu can be displayed on the display panel 44 to the viewer to urge the viewer to make a selection.

### (Third Embodiment)

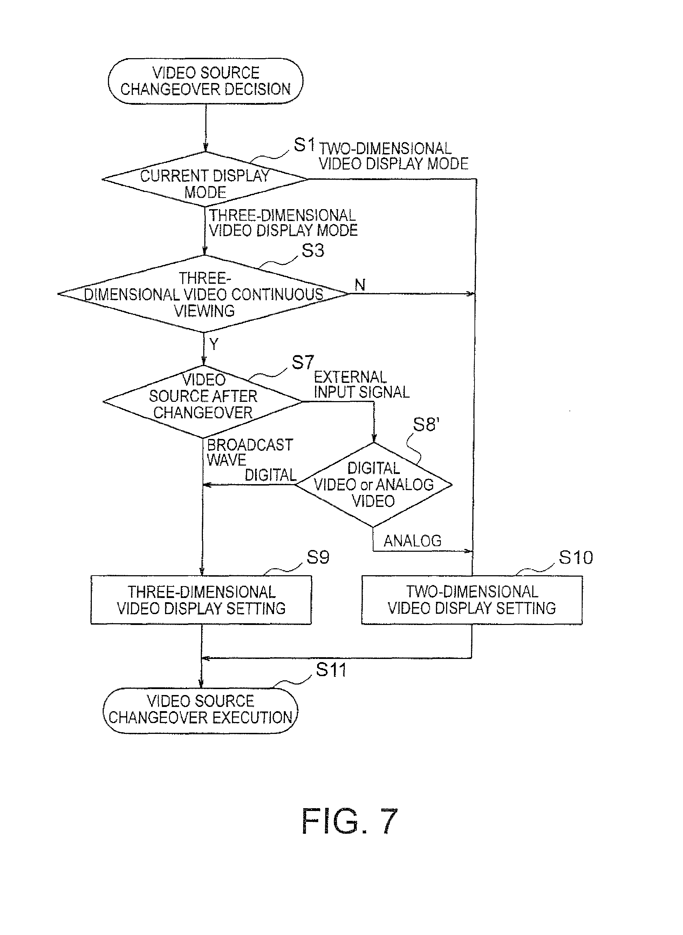

A video display apparatus according to a third embodiment will now be described with reference to FIG. 7. The video display apparatus according to the third embodiment differs from that according to the second embodiment in operation of the CPU 22. Operation of the CPU 22 is shown in FIG. 7. The third embodiment has a flow obtained from the second embodiment by replacing the step S8 with step S8'. Operation of the CPU 22 shown in FIG. 7 also represents operation performed when video source changeover is performed irrespective of the kind of the current video source in the same way as the case of the second embodiment.

In the third embodiment, the CPU 22 makes a decision in the video source decision unit 22c whether the video source after the changeover is a broadcast wave or an external input signal at the step S7. If the video source after the changeover is judged to be a broadcast wave, then the processing proceeds to the step S9 and the three-dimensional video display setting is performed in the same way as the second embodiment. On the other hand, if the video source after the changeover is judged to be an external input signal, then the processing proceeds to the step S8'.

At the step S8', the video source decision unit 22c makes a decision whether the external input signal is a digital video or an analog video. If the external input signal is judged to be an analog video, then the processing proceeds to the step S10 and the two-dimensional video display setting unit 22e sets the two-dimensional video display. On the other hand, if the external input signal is judged at the step S8' to be a digital video, then the processing proceeds to the step S9 and the three-dimensional video display setting unit 22d sets the three-dimensional video display and sends an instruction to the display changeover unit 22f to display the three-dimensional video.

According to the third embodiment, the two-dimensional video display setting or the three-dimensional video display setting is performed on the basis of the current display mode, the contents of the three-dimensional video continuous viewing setting, and the video source after the changeover in the same way as the second embodiment as described heretofore. As a result, it is possible to provide a video display method and a video display apparatus which do not need troublesome manual changeover manipulation when changing over the video source.

Furthermore, the three-dimensional video display setting or the two-dimensional video display setting is performed depending upon whether the video source after the changeover is a digital video or an analog video. As a result, the troublesome manual changeover manipulation becomes unnecessary when changing over the video source.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A video display method comprising:
storing setting contents concerning whether to view a three-dimensional video continuously; and
either displaying an input video as a three-dimensional video, or displaying the input video as a two-dimensional video, based on the stored setting contents.

2. The video display method according to claim 1, further comprising:
maintaining three-dimensional video display or changing over to two-dimensional video display based on a video source to be changed over, when the setting contents indicate continuous viewing of a three-dimensional video and a three-dimensional video is displayed.

3. The video display method according to claim 2, wherein if the video source to be changed over is sent via a broadcast, the three-dimensional video display is continued.

4. The video display method according to claim 2, wherein if the video source to be changed over is sent not via a broadcast, changeover to the two-dimensional video display is continued.

5. The video display method according to claim 2, wherein if the video source to be changed over is a three-dimensional video, the three-dimensional video display is continued.

6. The video display method according to claim 2, wherein if the video source to be changed over is a two-dimensional video, changeover to the two-dimensional video display is continued.

7. The video display method according to claim 1, further comprising:
performing three-dimensional video display or performing two-dimensional video display based on whether a video source to be changed over is a three-dimensional video or a two-dimensional video, when the setting contents indicate continuous viewing of a three-dimensional video and the video source to be changed over is sent not via a broadcast.

8. The video display method according to claim 1, further comprising:
performing three-dimensional video display or performing two-dimensional video display based on whether a video source to be changed over is a digital video or an analog video, when the setting contents indicate continuous viewing of a three-dimensional video and the video source to be changed over is sent not via a broadcast.

9. The video display method according to claim 1, wherein two-dimensional video display is performed if the setting contents indicate that a three-dimensional video is not viewed continuously.

10. A video display apparatus comprising:
a memory which stores setting contents indicating whether to view a three-dimensional video continuously;
a video converter unit which converts an input video based on the stored setting contents; and
a display panel which displays a video obtained by the conversion in the video converter unit.
